# EUROPEAN PATENT APPLICATION

(11) **EP 4 757 280 A1**
(43) Date of publication of application: **10.06.2026**
(21) Application number: 24218042.0
(22) Date of filing: 06.12.2024
(51) Int. Cl.: H04L 61/5014, G06F 9/4401

(54) **DISKLESS VIRTUALIZED BASEBAND UNIT ENABLING COST-OPTIMIZED VRAN DEPLOYMENTS**

(71) Applicant: Deutsche Telekom AG, 53113 Bonn (DE)
(72) Inventor: ERKENS, Dr. Holger, 53424 Remagen (DE)
(74) Representative: Vossius & Partner Patentanwälte Rechtsanwälte mbB

(57) **Abstract**

The invention relates to a method for setting up a diskless computer for a virtual radio access network, vRAN, the method comprising: sending, by the diskless computer, a request for a radio access network, RAN, image to a datacenter, the request comprising an unambiguous feature of the server; and receiving, by the diskless computer, the RAN image from the datacenter.

## Description

This disclosure is directed to diskless computers and diskless servers for deployment with a virtual radio access network (vRAN).

Until now, radio access network (RAN) baseband units are highly integrated and cost optimized units. With the upcoming of open RAN and virtualized RAN, standard data center server technology is going to be deployed at the cell sites. The virtualized distributed unit (vDU) and virtualized centralized unit (vCU) software handling the baseband functionality are deployed on those servers. This technology is not cost optimized for RAN and is likely to generate higher cost than a traditional solution.

A server requires many components like central processing unit (CPU), network interface card and storage devices where nowadays, usually SSDs are used. A server often carries two solid state drives (SSDs) for redundant operation.

Those SSDs drive multiple issues:
- Added cost - SSDs are required at each cell site.
- Added risk of failure - a technician needs to exchange the SSD at the cell site which creates considerably higher cost than in a datacenter.
- Risk of disclosing data in case SSDs are stolen from the site or extended cost of safe disposal of SSDs carrying sensitive data after lifetime.
- Update effort: Software on cell site servers need to be regularly updated which results in a specific version stored at the cell site which needs to be tracked. Versions may differ between cell sites.

The above-mentioned disadvantages are at least partly overcome and/or advantages mentioned herein are at least partly achieved with the features of the independent claims. Dependent claims define preferred embodiments of the present disclosure. The invention is set out in the appended set of claims.

The present disclosure relates to a method for setting up a diskless computer for a virtual radio access network (vRAN) the method comprising: sending, by the diskless computer, a request for a radio access network (RAN) image to a datacenter, the request comprising an unambiguous feature of the server; and receiving, by the diskless computer, the RAN image from the datacenter.

The RAN image may be a software image and/or a maintenance image, The RAN image may comprise RAN functions. The maintenance image may be used for test purposes. The request for the RAN image may be send to a RAN image repository, which may be comprised by the datacenter. The RAN image may be received from the RAN image repository. The RAN image may comprise vDU and/or vCU software.

Various embodiments may preferably implement the following features:
Preferably, the unambiguous feature of the diskless computer is the IP address of the computer.

Alternatively, the unambiguous feature may be a MAC address of a network adapter of the computer or a server serial number. This may be especially advantageous in case of zero touch provisioning (ZTP), where the discless computer has no IP address at the beginning. The unambiguous feature may be used to relate the computer to its location. Other unambiguous features are possible. The unambiguous feature preferably can be unambiguously connected the diskless computer.

Preferably, the method further comprises: sending, by the diskless computer, a Dynamic Host Configuration Protocol (DHCP) request to a DHCP relay agent. This request may request an IP address and/or another unambiguous feature. This request may also request a RAN image for the computer.

Preferably, the method further comprises: receiving, by the diskless computer, an assigned IP address, and preferably port information, from a DHCP relay agent.

Preferably, the method further comprises: receiving, by the diskless computer, RAN image repository target information from a RAN configuration logic and database.

The RAN image repository target information may be used to specify a RAN image to specific needs of the computer. Such specific needs may arise due to the location of the computer. The radio configuration of the site may be different from site to site, e.g. the number and type of radios connected. This may result in differently configured images. Moreover, a site may run on a specified set of software versions which may be planned per site. Then, different hardware configurations will need different drivers as part of the image.

The RAN image repository target information may alternatively be used to specify to the datacenter (or the RAN image repository in the datacenter) which RAN image is needed. Then the datacenter may send this specific RAN image which is specified to the specific needs.

Preferably, the diskless computer is a diskless server.

The present disclosure also relates to a computer program product comprising a computer-readable program medium code stored thereupon, the code, when executed by a processor, causing the processor to implement a method as recited above.

The present disclosure also relates to a radio access network (RAN) comprising a diskless computer configured to run operations of virtualized Central Unit (vCU) and/or virtualized Distributed Unit (vDU); wherein the diskless computer may only comprise a non-volatile memory for firmware and/or BIOS, but does not comprise any other non-volatile memory.

Non-volatile memory may be a hard drive, like an SSD. Without such non-volatile memory, the computer is cheaper. The diskless computer may only comprise a non-volatile memory for BIOS/UEFI and no other non-volatile memory. The non-volatile memory for memory and/or BIOS/UEFI (only) may be configured to only hold this software. This non-volatile memory may be a read only memory (ROM), e.g. Flash memory. UEFI may be Unified Extensible Firmware Interface. BIOS may be Basic Input/Output System.

Preferably, the diskless computer is a diskless server.

Preferably, the diskless computer comprises a volatile random access memory (RAM).

Preferably, the diskless computer is configured to implement the method as described above.

Preferably, the RAN further comprises at least one antenna and a cell site gateway.

The exemplary embodiments disclosed herein are directed to providing features that will become readily apparent by reference to the following description when taken in conjunction with the accompanying drawings. In accordance with various embodiments, exemplary systems, methods, devices and computer program products are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

Thus, the present disclosure is not limited to the exemplary embodiments and applications described and illustrated herein. Additionally, the specific order and/or hierarchy of steps in the methods disclosed herein are merely exemplary approaches. Based upon design preferences, the specific order or hierarchy of steps of the disclosed methods or processes can be re-arranged while remaining within the scope of the present disclosure. Thus, those of ordinary skill in the art will understand that the methods and techniques disclosed herein present various steps or acts in a sample order, and the present disclosure is not limited to the specific order or hierarchy presented unless expressly stated otherwise.

The invention is specified by the independent claims. Preferred embodiments are defined in the dependent claims. In the following description, although numerous features may be designated as optional, it is nevertheless acknowledged that all features comprised in the independent claims are not to be read as optional.

The described advantages of the aspects are neither limiting nor exclusive to the respective aspects. An aspect might have more advantages, not explicitly mentioned.
Fig. 1 is a schematic representation of a part of a communication system, preferably for a cellular network.
Fig. 2 is a schematic process of setting up a diskless server at a cell site.

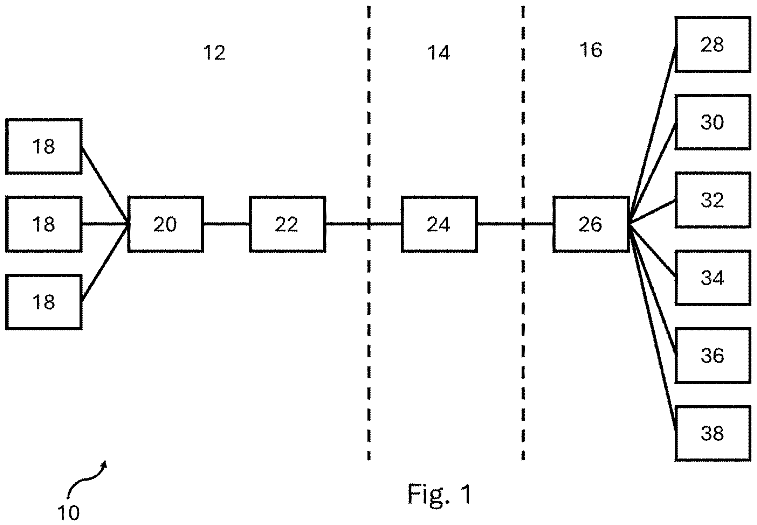

Figure 1 is a schematic representation of a part of a communication system 10, preferably for a cellular network. The communication system 10 comprises three parts or sections: a cell site system 12, an aggregation site 14, and a datacenter 16.

The cell site system 12 comprises three antennas 18, a server 20 (may be a computer) running vDU/vCU workloads, and a cell site gateway 22. The cell site system 12 is at a cell site. The cell site system may be a RAN. The cell site system 12 may be a radio access network (RAN), a cell tower, and/or a cellular base station. The cell site system 12 may be and/or comprise one or more nodeBs.

The antennas 18 may be radio units. The number may be different from three: for example one, or a plurality like two, five, ten, or more. The plurality of antennas 18 may all be connected to the server 20.

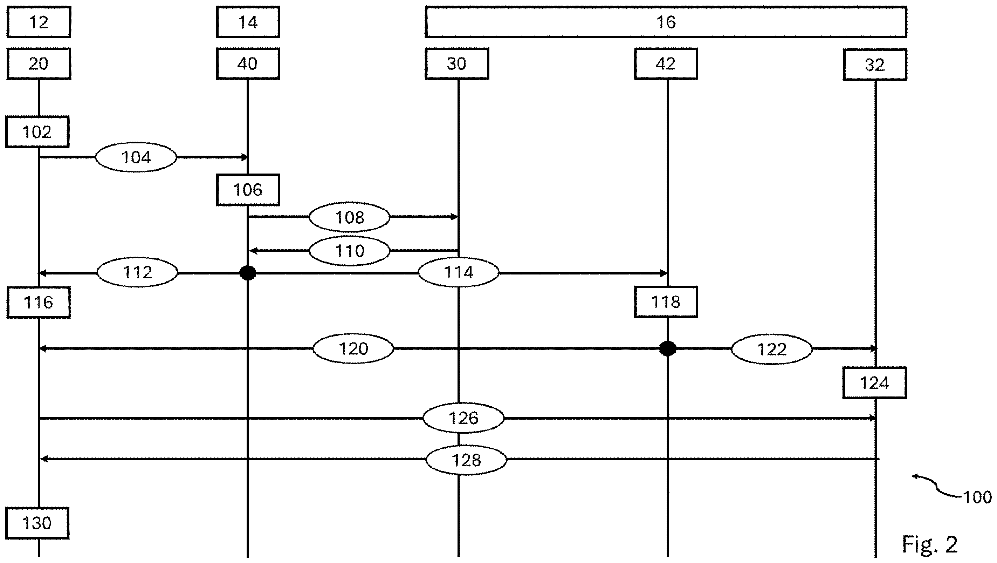

The server 20 is running vDU and/or vCU workloads. There may be multiple servers 20: one running vCU workloads, and one or more running vDU workloads. The (one or more) server 20 does not comprise any non-volatile memory units, like SSDs or other local hard drives. The server 20 may be a diskless node. The server 20 may be configured to implement the corresponding method steps shown in and explained for fig. 2. The server may have an IP address of 168.82.22.169 (maybe only after the DHCP request has been successfully conducted). The server 20 may be produced, sent to and installed at the cell site. The site information ("on which site is the server deployed?") may be handed over via IP address, server serial number or MAC address to the centralized software provisioning system in the datacenter 16.

SSDs, or other non-volatile memory units, at the RAN site, especially in the server 20, are avoided by enabling remote data storage and data transfer to the cell site during the power-up process of the cell site. Software images with data may be exposed for download at regional cell sites. During cell site power-up, the server 20 may fetch the image from the RAN image repository 32 (regional datacenter), for example via new technologies such as non-volatile memory express over transmission control protocol (NVMe-over-TCP). Since DUs (distributed units) do handle large amounts of user traffic, but only a limited amount of subscriber information, the main data transfer may happen during power-up of the cell site. Moreover, cell sites usually operate with a single connection to regional datacenters 16 for all traffic - the added risk of loss of network connection for remote data storage does not create a higher risk since the RAN traffic flow would be impossible at that point in time as well. Software version tracking is simplified since software maintenance is only executed in regional datacenters while at the cell site, the server 20 will be directed just to a different software repository in case of upgrade.

The disclosure may be applicable in centralized or other edge datacenters as well, and/or in regional datacenters. Many advantages are seen for RAN sites.

The cell site gateway 22 connects the cell site system 12 to the aggregation site 14. The cell site gateway 22 may be a cell site router. The cell site gateways 22 may serve as an interface between a cellular base station and the mobile core network. The cell site gateway 22 may aggregate mobile data traffic from the cellular access network (cell site system 12) and transports it back to the service provider's core network and/or datacenter 16.

The aggregation site 14 comprises an aggregation router 24. An aggregation router 24 is configured to manage and optimize data traffic. The aggregation router 24 may be connected to multiple cell site systems similarto the cell site system 12 described above. The aggregation router 24 may consolidate traffic from multiple cell sites, ensuring efficient data flow and reducing congestion. The aggregation site 14 may further comprise a DHCP relay agent 40 (not shown in fig. 1). The DHCP relay agent 40 may be a feature of the aggregation router 24.

The datacenter 16 comprises a datacenter router and switch fabric 26, a Kubernetes master node 28, a Dynamic Host Configuration Protocol (DHCP) server 30, an image repository 32, operating system/Container as a Service (OS/CaaS) runtime data 34, vDU/vCU ephemeral data 36, and vDU/vCU operational data 38. The datacenter 16 may further comprise a RAN configuration logic and database 42 and a RAN image repository 32 (not shown in fig. 1). The datacenter 16 may be a regional datacenter or a central datacenter. It is also called just datacenter 16. Drives (for example: SSDs or other kinds of hard drives) for runtime data of OS, CaaS and vDU/vCU as well as vDU/vCU operational data (e.g. logs, traces) may be set up in the datacenter 16. All drives may be made accessible towards the access network (including cell sites) via IP addresses. The datacenter 16 may comprise memory drives (like non-volatile memory). These memory drives may hold information comprising the image repository 32, the OS/CaaS runtime data 34, the vDU/vCU ephemeral data 36, and the vDU/vCU operational data 38.

The datacenter router and switch fabric 26 has two parts which ensure efficient data transmission and network performance.

The Datacenter Router may be configured for different things: It may direct data packets between different networks within the data center and to external networks. It may manage and optimize the flow of data traffic to prevent congestion and ensure smooth communication. It may include security features such as firewalls and intrusion detection systems to protect the network.

The switch fabric may be a network topology that interconnects network nodes via switches. It may be configured for different things: It may enable high-speed data exchange between connected devices, ensuring efficient communication. The switch fabric may provide internal redundancy, which enhances the network's reliability and fault tolerance. It may allow for scalable network designs, accommodating the growing data demands of modern mobile communication systems.

The Kubernetes master node 28 (also known as control plane) may be responsible for managing the entire cluster. It may control the vDU/vCU server 20. The Kubernetes master node 28 may have an IP address of 168.82.10.10.

The Dynamic Host Configuration Protocol (DHCP) server 30 is optional. The DHCP server 30 is configured to manage IP addresses and network configurations. The DHCP server 30 may automatically assign IP addresses to devices (clients; the server 20) when they connect to the network Alternatively, the IP address may be assigned upon request. This ensures that each device has a unique IP address, which is essential for communication. The DHCP server 30 may be configured to provide other network configuration parameters such as subnet masks, default gateways, and DNS server addresses. The IP addresses assigned by the DHCP server may be dynamic, meaning they are leased for a specific period. When a device disconnects or the lease expires, the IP address may be returned to the pool for reallocation. The DHCP server 30 may have an IP address of 168.82.10.20.

The image repository 32 may comprise software images and/or OS images. The image repository 32 (or the memory unit it is saved on) may have an IP address of 168.82.10.30. A pre-compiled image of operating system, CaaS (Kubernetes) and relevant tools/drivers may be stored in the image repository of the regional datacenter for concurrent read. vDU/vCU images may be stored, ready for deployment by Kubernetes.

The OS/CaaS runtime data 34 comprises different parts. CaaS may point towards container platforms like Kubernetes. The OS/CaaS runtime data 34 (or the memory unit it is saved on) may have an IP address of 168.82.10.40.

The vDU/vCU ephemeral data 36 (or the memory unit it is saved on) may have an IP address of 168.82.10.50. The vDU/vCU operational data 38 (or the memory unit it is saved on) may have an IP address of 168.82.10.60.

Figure 2 is a schematic process of setting up a diskless server 20 at a cell site. The method may be applied to and implemented by the parts shown in fig. 1.

At boot up of the server 20, since it does not have non-volatile memory (disks), it needs to connect to the RAN image repository 32 in the datacenter 16. The server needs to fetch an IP address and know the IP address of the image repository. Different ways exist to perform this: In one alternative, the diskless server 20 comes with a static IP address which has been programmed during production. The image repository address is as well preprogrammed. In a second alternative, static IP addresses for the diskless server 20 and the image repository 32 are fetched from a USB drive during cell site system 12 installation in an initial boot/preparation step. In a third alternative, DHCP provisions an address for the diskless server 20 and sets the current IP address in the image repository. The third alternative is shown in fig. 2. The server 20 can be set up without prior knowledge about the server 20 on the side of the datacenter 16. The image can be configured with the IP address. This configuration is to specify the image to the specific location of the server 20 and so on. The other (first two) alternatives may be able to omit some steps, as for example omit steps 104 to 112. In case of site data as part of server data stored in firmware or an attached USB, the procedure can be simplified with regards to physical location lookup since RAN config logic & database have the location knowledge already then.

In Step 102, the server 20 at the cell site is powered-up. The server 20 is diskless. The server 20 may be started up via a broadcast, for example from service management and orchestration (SMO) or the datacenter 16, for example by the Kubernetes master node 28.

In Step 104, the server 20 sends a layer 2 (L2) broadcast and DHCP request to the DHCP relay agent 40. In fig. 2, the DHCP relay agent 40 is part of the aggregation site 14. An aggregation router may be part of the aggregation site 14. Alternatively, the DHCP relay agent 40 may be positioned elsewhere, dependent on the system topology. The L2 broadcast and DHCP request may be for getting an IP address assigned and/or for getting a RAN image. The DHCP relay agent 40 may use the port on which the request was received as additional information in a later step. The L2 broadcast may be part of the DHCP request via the DHCP relay gateway. In the beginning, only layer 2 communication may be possible, especially when no IP address has been offered yet to the diskless server 20.

In Step 106, the DHCP request is received on a physical port X (additional information) at the DHCP relay agent 40.

In Step 108, the DHCP relay agent 40 forwards the DHCP request to the DHCP server 30.

In Step 110, the DHCP server 30 sends an IP address as DHCP offer to the DHCP relay agent. This step 110 may be in response to step 108.

In Step 112, the DHCP relay agent 40 sends a DHCP offer to the server 20. The DHCP offer may comprise the IP address and the port information (default gateway (GW)).

In Step 114, the DHCP relay agent 40 transfers port information (like physical port X, additional information, and/or default GW) and IP address information to a RAN config logic and database 42. The RAN config logic and database 42 may be part of the datacenter 16. The port X may map the site to a specific geographical location. Ports of the aggregation routers and their connection to a location may be stored in the RAN config logic & database. This may be a layer 1 aspect. The default GW may be a layer 3 aspect not referring to the port as such. The default GW may be a generic information towards the server asking for an IP address.

In Step 116, the IP address and default GW received by the server 20 are configured by (and in) the server. Step 116 may be in response to step 112.

In Step 118, the RAN config logic and database 42 registers a physical location lookup RAN site of the server 20. Step 118 may be in response to step 114. The IP address given to the server 20 may be connected to the location of the server 20 in the RAN config logic and database 42. With this, the image can be specified to the specific needs and needed configurations of the server 20 (at a later step). The RAN config logic and database 42 can be created or information can be added to the RAN config logic and database 42, linking the IP address to the location of the server 20. Also, port information (see additional information of step 104) may be added to the RAN config logic and database 42. Also other information can be added to the RAN config logic and database 42, as for example: communication bands, band-width, etc.

Step 118 may be a mix of two things: 1) Physical location lookup and 2) RAN site registration. 1) Physical location lookup may refer to the matching of the received detail (e.g. port X of aggregation router Y) with a location database yielding the location of the RAN site. 2) RAN site registration may refer to storing that matching set of information for further usage (e.g. selection of the correct image for this site).

In Step 120, the RAN config logic and database 42 transfers a RAN image repository target information to the server 20. The target (server 20) is stored for later boot from the predefined image (RAN image).

In Step 122, the RAN config logic and database 42 sends a preparation request for a registered RAN site to the RAN image repository 32. This request may include information concerning the server 20 from the RAN config logic and database 42.

In Step 124, the RAN image repository 32 sets up drives and an image, including RAN site configuration. This may include specifying the image to the specific needs and needed configurations of the server 20 (at its specific location). Alternatively, this may include a configuration file.

In Step 126, the server 20 sends a request binding to an image according to registration from image repository target to the RAN image repository 32. This request may include the IP address of the server 20. The request of step 126 may establish a continuous connection. Data may be read by the server 20 from the RAN image repository 32 at various times. In an alternative, the request of step 126 may be a one time request resulting in a one time sending of the RAN image.

In Step 128, the RAN image repository 32 sends an acknowledgement of the binding and enables boot process to the server 20. This may include specific instruction and/or data for the specific needs and needed configurations of the server 20 (at its specific location). This step 128 may be in response to step 126. The assignment of these specific needs and needed configurations of the server 20 (at its specific location) may be done by the Kubernetes master node 28.

In Step 130, the server 20 boots a remote image and starts operation. The RAN operation may commence. After connection to the RAN image repository 32, the diskless server 20 boots from the pre-compiled image provided there. All runtime data paths are tagged with the relevant runtime data IP address for the specific server 20 at this point in time. In this way, a single pre-compiled image is sufficient for many servers (other servers like server 20). The Kubernetes master node 28 may deploy pods with the vDU/vCU software on the diskless server 20 according to the site requirements. vDU/vCU are configured towards site requirements (at the cell site) and vDU/vCU ephemeral and operational data storage are configured accordingly.

In an embodiment, a RAM (random access memory) disk for Kernel-related runtime data may be set up in the diskless server 20. This is advantageous in case of performance issues.

In an embodiment, the server 20 receives address data of the image to be used.

In case of a software update, an updated, pre-tested pre-compiled RAN image is added to the image server with the RAN image repository 32 and a link is set for all diskless vDU/vCU entities (Server 20) which should receive the new RAN image. The software update at the server 20 is simply made by rebooting the specific machine. A refresh of operational and ephemeral data storages may be done.

Removal of the diskless vDU/vCU (server 20), e.g. in case of maintenance or repair, is done by physical replacement and installation of a new machine (new server 20) which is then powered up, following the process described above. The new machine may be identical to the server 20 (in a non-broken state). A garbage collection process in the datacenter 16 may ensure all operational and ephemeral data storages for the replaced server 20 are deleted or archived. Being diskless, the decommissioned server 20 does not require data destruction measures.

The above-described process requires equivalent server variants on each site making use of a specific precompiled image since all software components and drivers will be qualified for the particular combination.

In an alternative to the method of fig. 2, the serial number of the server 20 or another unambiguous feature of the server 20 (like the MAC address of a network adapter of the server 20) may be used instead or additionally to the IP address. This unambiguous feature may be used to relate the server 20 to its location.

In a further alternative to the method of fig. 2, the unambiguous feature may be set up manually during production or (mechanical) installation of the server 20, maybe by using an USB-stick (pen drive).

In general, the unambiguous feature (IP address or other) of the server 20 is linked to the location data of the server 20.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any one of the above-described exemplary embodiments.

It is also understood that any reference to an element herein using a designation such as "first," "second," and so forth does not generally limit the quantity or order of those elements.

Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any one of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any one of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "unit" as used herein, refers to software, firmware, hardware, and any combination of these elements for performing the associated functions described herein. Additionally, for purpose of discussion, the various units are described as discrete units; however, as would be apparent to one of ordinary skill in the art, two or more units may be combined to form a single unit that performs the associated functions according embodiments of the present disclosure.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of the claims. Thus, the disclosure is not intended to be limited to the implementations shown herein, but is to be accorded the widest scope consistent with the novel features and principles disclosed herein, as recited in the claims below.

## Claims

1. Method (100) for setting up a diskless computer for a virtual radio access network, vRAN, the method comprising:
sending (126), by the diskless computer, a request for a radio access network, RAN, image to a datacenter (16), the request comprising an unambiguous feature of the diskless computer (20); and
receiving (128), by the diskless computer, the RAN image from the datacenter (16) for setting up the diskless computer.

2. The method (100) of claim 1, wherein the unambiguous feature of the diskless computer is an IP address of the diskless computer.

3. The method (100) of any of claims 1 and 2, further comprising:
sending (104), by the diskless computer, a Dynamic Host Configuration Protocol, DHCP, request to a DHCP relay agent (40).

4. The method (100) of any of claims 1 to 3, further comprising:
receiving (112), by the diskless computer, an assigned IP address, and preferably port information, from a DHCP relay agent (40).

5. The method (100) of any of claims 1 to 4, further comprising:
receiving (120), by the diskless computer, RAN image repository target information from a RAN configuration logic and database.

6. The method (100) of any of claims 1 to 5, wherein the diskless computer is a diskless server (20).

7. A computer program product comprising a computer-readable program medium code stored thereupon, the code, when executed by a processor, causing the processor to implement a method (100) recited in any one of claims 1 to 6.

8. Radio access network, RAN, comprising a diskless computer configured to run operations of virtualized Central Unit, vCU, and/or virtualized Distributed Unit, vDU;
wherein the diskless computer (20) may only comprise a non-volatile memory for firmware and/or BIOS/UEFI, but does not comprise any other non-volatile memory.

9. RAN of claim 8, wherein the diskless computer is a diskless server (20).

10. RAN of claim 8 or 9, wherein the diskless computer comprises a volatile random access memory, RAM.

11. RAN of any of claims 8 to 10, wherein the diskless computer is configured to implement the method (100) of any of claims 1 to 6.

12. RAN of any of claims 8 to 11, further comprising at least one antenna (18) and a cell site gateway (22).

## Amended claims

### Amended claims in accordance with Rule 137(2) EPC.

1. Method (100) for setting up a diskless computer for a virtual radio access network, vRAN, the method comprising:
sending (126), by the diskless computer, a request for a radio access network, RAN, image to a datacenter (16), the request comprising an unambiguous feature of the diskless computer (20), wherein the RAN image is a software image; and
receiving (128), by the diskless computer, the RAN image from the datacenter (16) for setting up the diskless computer.

2. The method (100) of claim 1, wherein the unambiguous feature of the diskless computer is an IP address of the diskless computer.

3. The method (100) of any of claims 1 and 2, further comprising:
sending (104), by the diskless computer, a Dynamic Host Configuration Protocol, DHCP, request to a DHCP relay agent (40).

4. The method (100) of any of claims 1 to 3, further comprising:
receiving (112), by the diskless computer, an assigned IP address from a DHCP relay agent (40).

5. The method (100) of any of claims 1 to 4, further comprising:
receiving (120), by the diskless computer, RAN image repository target information from a RAN configuration logic and database.

6. The method (100) of any of claims 1 to 5, wherein the diskless computer is a diskless server (20).

7. A computer program product comprising a computer-readable program medium code stored thereupon, the code, when executed by a processor, causing the processor to implement a method (100) recited in any one of claims 1 to 6.

8. Radio access network, RAN, comprising a diskless computer configured to run operations of virtualized Central Unit, vCU, and/or virtualized Distributed Unit, vDU;
wherein the diskless computer (20) may only comprise a non-volatile memory for firmware and/or BIOS/UEFI, but does not comprise any other non-volatile memory.

9. RAN of claim 8, wherein the diskless computer is a diskless server (20).

10. RAN of claim 8 or 9, wherein the diskless computer comprises a volatile random access memory, RAM.

11. RAN of any of claims 8 to 10, wherein the diskless computer is configured to implement the method (100) of any of claims 1 to 6.

12. RAN of any of claims 8 to 11, further comprising at least one antenna (18) and a cell site gateway (22).
